# EUROPÄISCHE PATENTANMELDUNG

(11) **EP 1 057 688 A1**
(43) Veröffentlichungstag der Anmeldung: **06.12.2000**
(21) Anmeldenummer: 00111449.5
(22) Anmeldetag: 27.05.2000
(51) Int. Cl.: B60N 2/48, G01M 19/00

(54) **Verfahren und Vorrichtung zur Überprüfung der Sicherheit vom Kopfstützen**

(30) Priorität: 04.06.1999 DE 19925609
(71) Anmelder: TuJ Präzision, Maschinen- und Stahlbau GmbH, 55266 Wörrstadt (DE)
(72) Erfinder: Tratschitt, Heinz, 55268 Nieder-Olm (DE); Jabusch, Bernd, 55234 Bechtolsheim (DE)
(74) Vertreter: Weber, Dieter, Dr.

(57) **Zusammenfassung**

Die vorliegende Erfindung betrifft ein Verfahren bzw. eine Vorrichtung zur Überprüfung der Sicherheit von Kopfstützen. Dadurch, daß eine Kraft auf die Kopfstütze aufgebracht wird und die daraus resultierende Auslenkung bzw. die Bewegung der Kopfstütze registriert wird, kann die Sicherheit von Kopfstützen sehr schnell und vor allem kostengünstig überprüft werden. In einem bevorzugten Verfahren wird die aufzubringende Kraft kontinuierlich bis zu einer definierten Grenzkraft gesteigert. Insbesondere, wenn die Kraft in Auszugsrichtung bzw. in Richtung der Höhenverstellung auf die Kopfstütze aufgebracht wird, kann durch die kontinuierliche Steigerung der Kraft ein allmähliches Verstellen der Höhe der Kopfstütze erreicht werden. Nachdem die maximale Höhe der Kopfstütze erreicht ist, wird die aufzubringende Kraft bis zu einer Grenzkraft gesteigert. Hält die Kopfstütze bzw. die Halterung der Kopfstütze dieser Grenzbelastung ohne weitere Auslenkung der Kopfstütze stand, so hat die Kopfstütze die Überprüfung bestanden. Anderenfalls, wenn die Kopfstütze durch die Grenzbelastung über die maximale Höheneinstellung hinaus bewegt wird, genügen diese Kopfstütze bzw. ihre Halterung am Sitz nicht den gewählten Sicherheitskriterien und müssen ersetzt werden.

## Beschreibung

Die vorliegende Erfindung betrifft ein Verfahren bzw. eine Vorrichtung zur Überprüfung der Sicherheit von Kopfstützen.

Im Zuge verschärfter Sicherheitsvorschriften werden mittlerweile weltweit in den meisten Personenkraftwagen aber auch in Lastkraftwagen Sitze mit Kopfstützen eingebaut. Diese Kopfstützen dienen, insbesondere bei Unfällen, der Stabilisierung des Kopfes bzw. der Halswirbel der Insassen.

Zum Ausgleich unterschiedlicher Körpergrößen von verschiedenen Insassen ist es üblich, daß die Kopfstützen in der Höhe verstellbar sind. Üblicherweise sind dazu an der Kopfstütze zwei meist metallische Stangen befestigt, die durch Aufnahmelöcher im Sitz aufgenommen werden können und durch stückweises Herausziehen der Kopfstützen aus dem Sitz in der Höhe verstellt werden. Um insbesondere bei Unfällen das Verletzungsrisiko der Insassen zu minimieren, ist es notwendig, daß die Kopfstütze in allen Richtungen einen sicheren Halt aufweist. Insbesondere ist es daher auch notwendig, daß die Kopfstütze aus Gründen des praktischen Gebrauchs sich zwar leicht in der Höhe verstellen läßt, eine völlige Entfernung der Kopfstütze aus dem Sitz aber nur mit erheblich größerem Kraftaufwand bzw. durch eine zusätzliche aktive Entriegelung einer Halteeinrichtung möglich ist.

Bislang werden diese Erfordernisse zwar auf dem Papier erfüllt, eine Überprüfung der Sicherheit von Kopfstützen während der Sitzherstellung bzw. der Montage der Kopfstützen am Sitz findet jedoch nicht statt.

Der vorliegenden Erfindung liegt daher die Aufgabe zugrunde, ein Verfahren und eine Vorrichtung bereitzustellen, die es ermöglichen, die Sicherheit von Kopfstützen sehr schnell und kostengünstig zu überprüfen.

Hinsichtlich des Verfahrens wird diese Aufgabe dadurch gelöst, daß eine Kraft auf die Kopfstütze aufgebracht wird und die daraus resultierende Auslenkung bzw. Bewegung der Kopfstütze registriert wird. Durch die Registrierung der Reaktion der Kopfstütze auf das Aufbringen einer Kraft auf die Kopfstütze ist eine sehr einfache Überprüfung der Sicherheit von Kopfstützen, möglich.

In einem bevorzugten Verfahren wird die aufzubringende Kraft kontinuierlich bis zu einer definierten Grenzkraft gesteigert. Insbesondere, wenn die Kraft in Auszugsrichtung bzw. in Richtung der Höhenverstellung auf die Kopfstütze aufgebracht wird, kann durch die kontinuierliche Steigerung der Kraft ein allmähliches Verstellen der Höhe der Kopfstütze erreicht werden. Nachdem die maximale Höhe der Kopfstütze erreicht ist, wird die aufzubringende Kraft bis zu einer Grenzkraft gesteigert. Hält die Kopfstütze bzw. die Halterung der Kopfstütze dieser Grenzbelastung ohne weitere Auslenkung der Kopfstütze stand, so hat die Kopfstütze die Überprüfung bestanden. Anderenfalls, wenn die Kopfstütze durch die Grenzbelastung über die maximale Höheneinstellung hinaus bewegt wird, genügen diese Kopfstütze bzw. ihre Halterung am Sitz nicht den gewählten Sicherheitskriterien und müssen ersetzt werden.

Die Grenzkraft wird vorzugsweise für ein definiertes Zeitintervall aufgebracht. Dadurch kann eine weitere Steigerung der Zuverlässigkeit des Verfahrens erreicht werden, da die Kopfstütze somit auch unter Dauerbelastung getestet wird.

Eine besondere Ausführungsform dieses Verfahrens ist dadurch gekennzeichnet, daß die Kopfstützen bei Bestehen der Überprüfung wieder in ihre ursprüngliche Ausgangsposition gebracht werden. Insbesondere bei der Überprüfung von sehr vielen Kopfstützen ist es nach der Überprüfung optisch möglich, das Bestehen der Überprüfung der entsprechenden Kopfstütze abzulesen. Befindet sich die Kopfstütze noch im ausgelenkten Zustand, so hat sie den Belastungstest nicht bestanden. Ist sie dagegen wieder in ihrer Ausgangsposition, so ist die Kopfstütze in Ordnung.

Ein besonders bevorzugtes Verfahren zeichnet sich dadurch aus, daß es an einer Fördereinrichtung durchgeführt werden kann und die Überprüfungsdauer an bestehende Bandtakte (Bandstillstandsintervalle) angepaßt werden kann. Da üblicherweise solche Fördereinrichtungen zur Montage einzelner Teile (z. B. der Kopfstützen) angehalten werden, ist es möglich, das Überprüfungsverfahren in dem Moment durchzuführen, in dem das Band angehalten wird. Die Dauer der Belastung kann leicht auf die Bandstillstandsintervalle angepaßt werden.

Dadurch ist sichergestellt, daß durch die zusätzliche Überprüfung der Sicherheit der Kopfstützen während der Montage der Kopfstützen praktisch keine zusätzliche Zeit aufgewendet werden muß.

Insbesondere bei Rücksitzen, die in der Regel mindestens zwei Kopfstützen aufweisen, ist es vorteilhaft, wenn mindestens zwei Kopfstützen gleichzeitig überprüft werden. Durch die Zeitersparnis werden auch Kosten eingespart.

Hinsichtlich der Vorrichtung wird die obengenannte Aufgabe dadurch gelöst, daß die Vorrichtung Einrichtungen zum Aufbringen einer Kraft auf eine Kopfstütze sowie Einrichtungen zum Erfassen der Bewegung bzw. Auslenkung der Kopfstütze aufweist. Mit Hilfe dieser Vorrichtung ist es möglich, eine Belastungskraft auf die Kopfstütze aufzubringen und aus der erfaßten Bewegung bzw. Auslenkung der Kopfstütze zu schließen, ob die Kopfstütze die Sicherheitsanforderungen erfüllt oder nicht.

In einer bevorzugten Ausführungsform weist die Einrichtung zum Aufbringen einer Kraft einen Grundzustand und einen Haltezustand auf, wobei im Haltezustand die Einrichtung eine Kopfstütze umgreift. Außerdem weist die Einrichtung zum Aufbringen einer Kraft vorzugsweise mindestens einen Greifarm auf, der in der Halteposition die Kopfstütze von unten, d.h. in Auszugsrichtung umgreift. Dadurch ist es möglich, von unten eine Kraft auf die Kopfstütze auszuüben, um die Sicherheit der Kopfstützen zu überprüfen.

Zusätzlich kann je nach Anwendungsfall es von Vorteil sein, wenn die Einrichtung zum Aufbringen einer Kraft eine Kopfplatte aufweist, die sich in der Halteposition oberhalb der Kopfstütze befindet. Mit Hilfe dieser Kopfplatte ist es möglich, eine Kraft von oben auf die Kopfstütze auszuüben, um entweder die Belastungsfähigkeit der Kopfstütze in dieser Richtung zu überprüfen oder die Höheneinstellung der Kopfstütze auf ihren niedrigsten Wert einzustellen. Insbesondere dann, wenn verschiedene Arten von Kopfstützen überprüft werden sollen, ist es von großem Vorteil, wenn die seitlichen Greifarme in seitlicher Richtung bewegbar sind, in der Art, daß der Abstand zwischen den Greifarmen veränderbar ist. Dadurch ist es möglich, auch breitere bzw. schmalere Kopfstützen zu greifen und somit zu überprüfen.

Weitere Ausführungsformen sehen eine Rückenplatte und/oder eine vordere Platte bzw. vordere Greifarme vor, die es ermöglichen, daß zur Überprüfung der Sicherheit der Kopfstütze auch eine Belastungskraft von vorne bzw. hinten, also im wesentlichen senkrecht zu den Halterungsstangen der Kopfstützen, ausgeübt werden kann. Zur Ausübung der Kraft müssen Kopfstütze und die Einrichtung zum Aufbringen einer Kraft relativ zueinander bewegt werden. Es ist offensichtlich von Vorteil, wenn die Einrichtung zum Aufbringen einer Kraft je nach gewünschter Anwendung nach vorne und nach hinten und/oder vertikal bewegbar ist. Dadurch kann ganz gezielt die Richtung bestimmt werden, in der die Kraft ausgeübt werden soll.

Vorzugsweise ist die Einrichtung zum Aufbringen einer Kraft mit Hilfe von pneumatischen Linearzylindern bewegbar. Dadurch ist eine reproduzierbare Einstellung der Kraft möglich.

Bei einer bevorzugten Ausführungsform wird der pneumatische Druck der pneumatischen Linearzylinder bestimmt, um die auf die Kopfstütze ausgeübte Kraft exakt zu bestimmen. Besonders zweckmäßig erfolgt die Bestimmung des pneumatischen Drucks mit Hilfe von Druckmeßdosen.

Alternativ dazu ist es selbstverständlich auch möglich, daß die Bewegung der Einrichtung zum Aufbringen einer Kraft hydraulisch oder elektrisch bewegt wird. Die Bestimmung der auf die Kopfstütze aufgebrachten Kraft kann dann im Falle der elektrischen Bewegung beispielsweise über die Stromaufnahme des Motors erfolgen.

Um eine zügige Überprüfung von sehr vielen Kopfstützen hintereinander zu gewährleisten, ist es zweckmäßig, daß die Vorrichtung eine programmierbare Steuereinheit, welche die Einnahme der Halteposition bzw. der Grundposition steuert, besitzt. Aus den gleichen Gründen ist auch eine programmierbare Steuereinheit, welche die Einrichtung zum Aufbringen einer Kraft bewegt, von großem Vorteil.

In einer bevorzugten Ausführungsform wird die Auslenkung bzw. Bewegung der Kopfstütze über einen definierten Wert mit Hilfe eines Sensors erfaßt. Dadurch ist es möglich, die Kraftbeaufschlagung der Kopfstütze, nachdem die Kopfstütze über einen definierten Wert ausgelenkt worden ist, sofort zu beenden.

Auch hier kann es von Vorteil sein, wenn eine programmierbare Steuereinheit die Kontrolle der Sensoren übernimmt, so daß die Überprüfung der Sicherheit der Kopfstützen vollautomatisch erfolgen kann.

Bei der Überprüfung der Sicherheit von Kopfstützen, die in Rückbänken montiert sind, ist es von Vorteil, wenn die Vorrichtung mindestens zwei Einrichtungen zum Aufbringen einer Kraft auf einer Kopfstütze aufweist. Dadurch ist es möglich, alle Kopfstützen einer Rücksitzbank zur gleichen Zeit zu überprüfen.

Weitere Vorteile, Merkmale und Anwendungsmöglichkeiten werden deutlich anhand der folgenden Beschreibung einer speziellen Ausführungsform sowie der zugehörigen Figuren. Es zeigen:
- Figur 1: eine perspektivische Ansicht der gesamten Vorrichtung,
- Figur 2: eine perspektivische Ansicht der Einrichtung zum Aufbringen einer Kraft auf die Kopfstütze,
- Figur 3: eine schematische Skizze, die die Bewegbarkeit der Greifeinrichtung verdeutlicht und
- Figur 4: eine Seitenansicht der Vorrichtung in Griffposition.

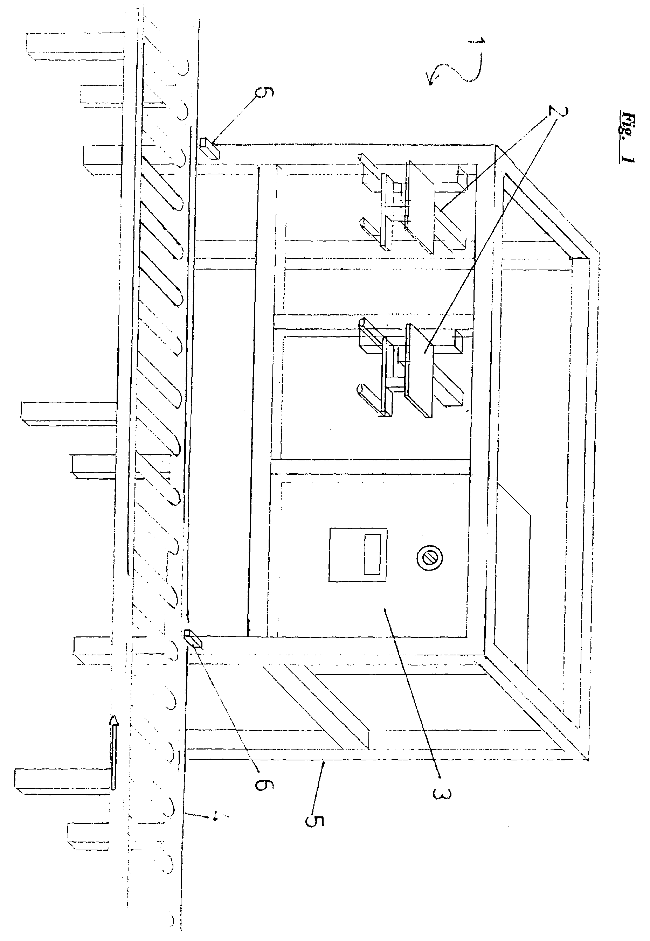

Figur 1 zeigt die erfindungsgemäße Vorrichtung als Ganzes. Die Vorrichtung 1 besteht dabei aus einem Grundgestell 5, welches in dieser Ausführungsform aus einem Aluminiumsystemprofil aufgebaut ist. An diesem Grundgestell sind die mechanischen Bauteile sowie die pneumatische und elektrische Steuerung befestigt. Die Steuerungen sind in dem Schaltschrank 3 untergebracht.

Die vorliegende Vorrichtung besteht aus zwei unabhängig voneinander arbeitenden Einheiten 2. Der Testablauf wird durch den Takt des Bandes vorgegeben. Eine Sitzeinheit mit Kopfstützen (z. B. ein Rücksitz) wird auf der Fördereinrichtung 4 transportiert. Mit Hilfe der Sensoren 6, die mit der Steuereinheit 3 verbunden sind, bestimmt die Vorrichtung 1 die Position der ankommenden Sitzeinheit. Bei Stillstand des Bandes erfolgt dann durch die Steuerung die Freigabe des Tests.

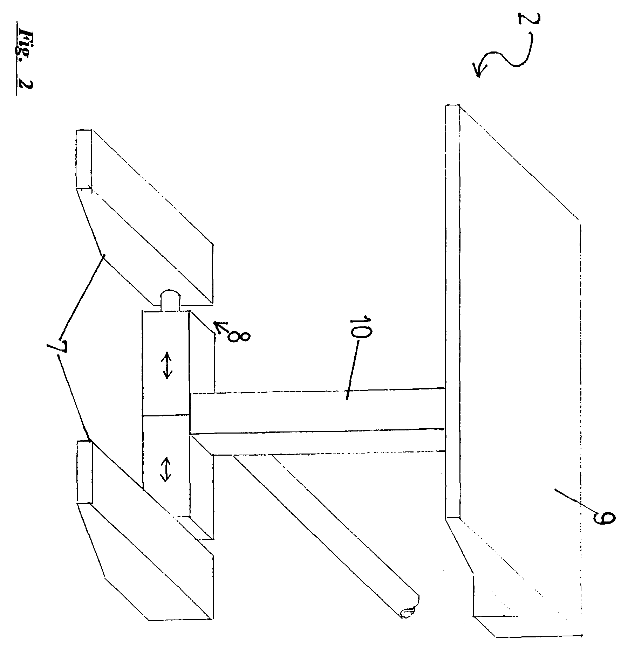

Die Greifvorrichtungen 2 werden dann durch die Steuereinheit 3 vertikal (mit Hilfe der Linearzylinder 12) bewegt, um sie in die gewünschte Position zu bringen. Die Greifvorrichtungen werden dann von der Rückseite mit Hilfe der Linearzylinder 11 an die Kopfstützen herangefahren, so daß das Rückenelement 10 die Hinterseite der Kopfstütze berührt. Die im wesentlichen parallelen Greifarme 7 können in horizontaler Richtung derart bewegt werden, daß sie die Kopfstütze von unten kraftschlüssig umfassen (siehe Fig. 2). In dieser Ausführungsform befinden sich die Kopfstützen bei Bandstillstand immer in etwa der selben Ausgangsposition. Eventuell auftretenden kleinere Verschiebungen in Bandlaufrichtung können mit Hilfe der (durch Linearzylinder 8 beweglichen) Greifarme 7 ausgeglichen werden. Selbstverständlich ist es für besondere Anwendungsfälle auch möglich, eine horizontale Bewegbarkeit der Greifvorrichtung in Bandlaufrichtung vorzusehen.

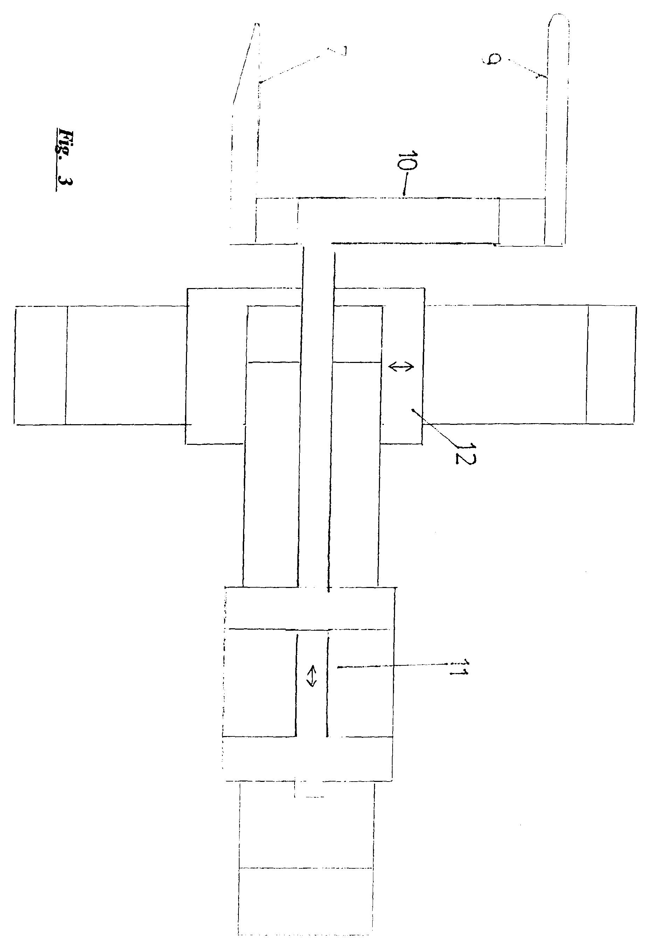

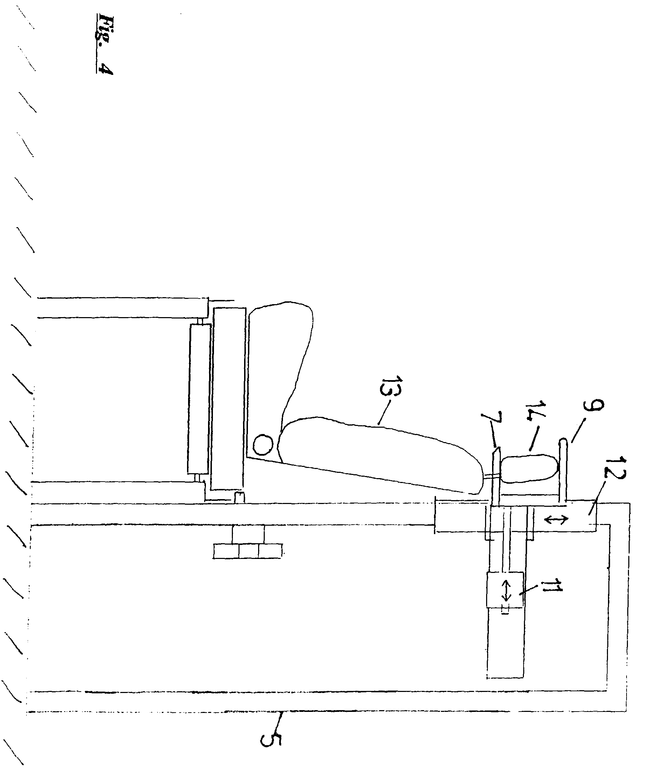

Die Greifvorrichtung 2 zur Ausübung einer Kraft auf die Kopfstützen ist in Figur 2 und 3 im Detail dargestellt. Die auf pneumatischen Lineareinheiten montierten Kunststoffgreifer 7, 9 werden bei Stillstand des Bandes ausgefahren und umschließen, wie in Figur 4 gezeigt, die Kopfstützen zangenartig und kraftschlüssig. Je nach Ausführungsform kann daher eine vertikale Relativbewegung der Kopfplatte 9 zu den Greifarmen 9 erforderlich sein. Ein Sensor, der mit der Steuereinheit 3 verbunden ist, bestätigt die korrekte Lage der Greifer und gibt ein Signal an die Steuerungseinheit.

Die ebenfalls aus pneumatischen Lineareinheiten 12 bestehenden Prüfschlitten fahren dann beispielsweise nach oben und ziehen die Kopfstützen zur Position der maximalen Höhe. Wird die höchste Position erreicht, so erfahren die pneumatischen Lineareinheiten einen erhöhten Widerstand und der Luftdruck erhöht sich bis zu einem definierten Wert, der über Druckmeßdosen abgenommen wird. Mit diesem konstanten Druck werden die Kopfstützen nun eine vorgegebene Zeit nach oben gedrückt. Wenn in diesem Zustand die Kopfstützen nicht weiter ausgezogen werden (können), so ist die Kopfstütze in Ordnung und die Kopfstützen werden mit den Prüfschlitten (mit Hilfe der Kopfplatte 9) wieder nach unten in die Ausgangslage geschoben und die Greifereinheiten 2 fahren schließlich in die Grundposition zurück.

Es erfolgt die Meldung an die Steuerung 3, daß die Kopfstütze in Ordnung ist und der Vorgang wiederholt sich bei der nächsten Sitzeinheit. Sollte die Auslenkung der Kopfstütze bereits vor Erreichen des eingestellten Druckes oder während des Haltens des eingestellten Druckes über einen definierten Wert hinausgehen, so gibt ein Sensor an der Greifereinheit ein Signal an die Steuerung 3, daß die Kopfstütze nicht in Ordnung ist und die Greifeinheit wird in die Grundposition zurückgefahren. Dadurch bleibt die defekte Kopfstütze in ihrer höchsten Position und ist somit auch optisch als fehlerhaft erkennbar.

Sämtliche Bewegungswege sowie die Verweildauer in der Halteposition bei vorgegebenem Druck sind zeitlich einstellbar. Dadurch wird gewährleistet, daß der Testablauf im Zeitraum eines Bandtaktes (Bandstillstandsintervall) abgeschlossen werden kann.

Die Daten und Testergebnisse können auf einem Bildschirm angezeigt werden oder in geeigneter Form auf einem Datenträger abgelegt werden.

Ähnlich erfolgt die Kraftbeaufschlagung der Kopfstützen auch entlang anderer Richtungen. In der hier gezeigten Ausführungsform kann eine Kopfstütze nicht von der Vorderseite mit einer Prüfkraft beaufschlagt werden. Es ist jedoch möglich die Kopfstütze zwischen Kopfplatte 9 und Greifarmen 7 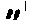 einzuklemmen" und dann mit Hilfe der Linearzylinder 11 eine 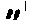 Zugkraft" auf die Kopfstütze aufzubringen. Alternativ ist es selbstverständlich auch möglich, z. B. die Greifarme derart zu konstruieren, daß sie die Kopfstütze in der Halteposition von unten und vorne kraftschlüssig umschließen.

Es versteht sich, daß die Vorrichtung auch mehr als zwei Greifvorrichtungen aufweisen kann. Insbesondere bei Rückbänken mit drei und mehr Kopfstützen ist eine Überprüfungsvorrichtung mit einer Anzahl von unabhängigen Greifvorrichtungen, die der Anzahl der Kopfstützen der Rückbank entspricht, von Vorteil.

## Patentansprüche

1. Verfahren zur Überprüfung der Sicherheit von Kopfstützen, **dadurch gekennzeichnet, daß** eine Kraft auf die Kopfstütze aufgebracht wird und die Auslenkung bzw. Bewegung der Kopfstütze registriert wird.

2. Verfahren nach Anspruch 1, **dadurch gekennzeichnet, daß** die aufzubringende Kraft kontinuierlich bis zu einer definierten Grenzkraft gesteigert wird.

3. Verfahren nach Anspruch 2, **dadurch gekennzeichnet, daß** die Grenzkraft für ein definiertes Zeitintervall aufgebracht wird.

4. Verfahren nach einem der Ansprüche 1 - 3, **dadurch gekennzeichnet, daß** die Kopfstützen bei Bestehen der Überprüfung wieder in ihre ursprüngliche Ausgangsposition gebracht werden.

5. Verfahren nach einem der Ansprüche 1 - 4, **dadurch gekennzeichnet, daß** es an einer Fördereinrichtung durchgeführt werden kann und die Überprüfungsdauer an bestehende Bandtakte (Bandstillstandsintervalle) angepaßt werden kann.

6. Verfahren nach einem der Ansprüche 1 - 5, **dadurch gekennzeichnet, daß** mindestens zwei Kopfstützen gleichzeitig überprüft werden.

7. Verfahren nach einem der Ansprüche 1 bis 6, **dadurch gekennzeichnet, daß** eine Kraft in Auszugsrichtung der Kopfstütze aufgebracht wird.

8. Verfahren nach einem der Ansprüche 1 bis 7, **dadurch gekennzeichnet, daß** eine Kraft senkrecht zur Auszugsrichtung der Kopfstütze aufgebracht wird.

9. Verfahren nach einem der Ansprüche 1 bis 8, **dadurch gekennzeichnet, daß** die Kraft pneumatisch, hydraulisch oder elektrisch aufgebracht wird.

10. Vorrichtung zur Überprüfung der Sicherheit von Kopfstützen, **dadurch gekennzeichnet, daß** die Vorrichtung Einrichtungen zum Aufbringen einer Kraft auf eine Kopfstütze sowie Einrichtungen zum Erfassen der Bewegung bzw. Auslenkung der Kopfstütze aufweist.

11. Vorrichtung nach Anspruch 10, **dadurch gekennzeichnet, daß** die Einrichtung zum Aufbringen einer Kraft eine Grundposition und eine Halteposition besitzt, wobei in der Halteposition die Einrichtung eine Kopfstütze umgreift.

12. Vorrichtung nach Anspruch 10, **dadurch gekennzeichnet, daß** die Einrichtung zum Aufbringen einer Kraft mindestens einen Greifarm aufweist, der in der Halteposition die Kopfstütze von unten umfaßt.

13. Vorrichtung nach Anspruch 12, **dadurch gekennzeichnet,** daß die Einrichtung zum Aufbringen einer Kraft mindestens zwei im wesentlichen parallele Greifarme aufweist, die in der Halteposition die Kopfstütze von unten umgreifen.

14. Vorrichtung nach Anspruch 10 oder 11, **dadurch gekennzeichnet, daß** die Einrichtung zum Aufbringen einer Kraft eine Kopfplatte aufweist, die sich in der Halteposition oberhalb der Kopfstütze befindet.

15. Vorrichtung nach Anspruch 13 oder 14, **dadurch gekennzeichnet, daß** die im wesentlichen parallelen Greifarme in seitlicher Richtung bewegbar sind, in der Art, daß der Abstand zwischen den Greifarmen veränderbar ist.

16. Vorrichtung nach einem der Ansprüche 11 bis 1 5, **dadurch gekennzeichnet, daß** die Einrichtung zum Aufbringen einer Kraft eine Rückenplatte aufweist, die in der Halteposition an der Rückseite der Kopfstütze anliegt.

17. Vorrichtung nach einem der Ansprüche 11 bis 16, **dadurch gekennzeichnet, daß** die Einrichtung zum Aufbringen einer Kraft eine vordere Plane oder vordere Greifarme aufweist, die in der Halteposition an der Vorderseite der Kopfstütze anliegt bzw. anliegen.

18. Vorrichtung nach einem der Ansprüche 10 bis 17, **dadurch gekennzeichnet, daß** die Einrichtung zum Aufbringen einer Kraft in der Halteposition in allen Richtungen kraftschlüssig mit der Kopfstütze verbunden ist.

19. Vorrichtung nach einem der Ansprüche 10 bis 18, **dadurch gekennzeichnet, daß** die Einrichtung zum Aufbringen einer Kraft nach vorne und nach hinten (zur Kopfstütze hin bzw. von der Kopfstütze weg) bewegbar ist.

20. Vorrichtung nach einem der Ansprüche 10 bis 19, **dadurch gekennzeichnet, daß** die Einrichtung zum Aufbringen einer Kraft zumindest in der Halteposition vertikal bewegbar ist.

21. Vorrichtung nach Anspruch 19 oder 20, **dadurch gekennzeichnet, daß** die Einrichtung zum Aufbringen einer Kraft mit Hilfe von pneumatischen Linearzylindern bewegbar ist.

22. Vorrichtung nach Anspruch 21, **dadurch gekennzeichnet, daß** sie eine Einrichtung zur Bestimmung des pneumatischen Drucks der pneumatischen Linearzylinder aufweist.

23. Vorrichtung nach Anspruch 22, **dadurch gekennzeichnet, daß** die Einrichtung zur Bestimmung des pneumatischen Drucks der pneumatischen Linearzylinder aus Druckmeßdosen besteht.

24. Vorrichtung nach einem der Ansprüche 19 bis 23, **dadurch gekennzeichnet, daß** sie eine programmierbare Steuereinheit, welche die Einrichtung zum Aufbringen einer Kraftsteuert, besitzt.

25. Vorrichtung nach einem der Ansprüche 10 bis 24, **dadurch gekennzeichnet, daß** sie eine programmierbare Steuereinheit, welche die Einnahme der Halteposition bzw. der Grundposition steuert, besitzt.

26. Vorrichtung nach einem der Ansprüche 10 bis 25, **dadurch gekennzeichnet, daß** die Auslenkung bzw. Bewegung der Kopfstützen über einen definierten Wert mit Hilfe eines Sensors erfaßt wird.

27. Vorrichtung nach einem der Ansprüche 24 bis 26, **dadurch gekennzeichnet, daß** die programmierbare Steuereinheit den gesamten Ablauf steuert.

28. Vorrichtung nach einem der Ansprüche 10 bis 27, **dadurch gekennzeichnet, daß** sie mindestens zwei Einrichtungen zum Aufbringen einer Kraft auf eine Kopfstütze aufweist.
